# EUROPÄISCHE PATENTSCHRIFT

(11) **EP 1 639 288 B1**
(45) Veröffentlichungstag und Bekanntmachung des Hinweises auf die Patenterteilung: **11.11.2009**
(21) Anmeldenummer: 04732955.2
(22) Anmeldetag: 14.05.2004
(51) Int. Cl.: F16L 27/087, F16L 27/093, F16L 39/04

(54) **DREHDURCHFÜHRUNG**
ROTATING PASSAGE
PASSAGE TOURNANT

(30) Priorität: 28.06.2003 DE 10329191
(43) Veröffentlichungstag der Anmeldung: 29.03.2006
(73) Patentinhaber: Schaeffler KG, 91074 Herzogenaurach (DE)
(72) Erfinder: ROCCA, Umberto, 91074 Herzogenaurach (DE); METTEN, Norbert, 91086 Aurachtal (DE)
(86) Internationale Anmeldenummer: PCT/EP2004/005173
(87) Internationale Veröffentlichungsnummer: WO 2005/001324

(56) Entgegenhaltungen:
- DE-A- 4 122 926
- DE-C- 918 064
- US-A- 4 759 573

## Beschreibung

### Gebiet der Erfindung

Drehdurchführung zur Verbindung von relativ zueinander drehenden, in einer Welle angeordneten Druckmittelleitungen einerseits und Druckmittelanschlüssen andererseits, durch welche ein flüssiges Druckmittel geführt wird, bestehend aus einer Welle, mindestens einer Druckmittelleitung in Form eines sich axial innerhalb der Welle erstreckenden Kanals, einer radialen Bohrung pro Druckmittelleitung von der Oberfläche der Welle zur Druckmittelleitung, wobei die Bohrungen der verschiedenen Druckmittelleitungen relativ zueinander in axialer Richtung versetzt sind, einem Anschlußteil, welches die Welle im Bereich der Bohrungen umfaßt, wobei das Anschlußteil im Bereich einer jeden Bohrung mit einer Ringnut ausgebildet ist, die die Bohrung komplett überdeckt, so daß zusammen mit der Welle ein Ringkanal entsteht, einem Druckmittelanschluß pro Druckmittelleitung, der druckdicht mit jeweils einem der Ringkanäle in Verbindung steht und diesen mit Druckmittel versorgt und Dichtringen, die die Ringkanäle gegeneinander abdichten.

Es sind Drehdurchführungen zur Verbindung von Druckmittelleitungen in sich relativ zueinander um eine Drehachse drehenden Maschinenteilen bekannt, wobei die Druckmittelleitungen der verschiedenen Maschinenteile über Stichbohrungen und Ringnuten miteinander in Verbindung stehen. Aus der DE 41 22 926 A1 ist eine Drehdurchführung bekannt, die Druckmittelleitungen in Form mehrerer axialer Kanäle innerhalb einer sich drehenden ersten Welle über ein stehendes Gehäuse mit Druckmittelleitungen einer zweiten sich drehenden Welle verbindet. Die Druckmittelleitungen der ersten Welle stehen über radiale Bohrungen mit Ringkanälen an der Oberfläche der Welle in Verbindung, die durch Ringnuten gebildet werden. Diese sind sowohl in der Welle als auch im Gehäuse angebracht. Ausgehend von den Ringkanälen sind weitere Druckmittelleitungen im Gehäuse angebracht. Das Druckmittel kann nun über die axialen Druckmittelleitungen der ersten rotierenden Welle mittels der radialen Bohrungen in den Ringkanal einströmen und von dort in die Druckmittelleitung des stehenden Maschinenteils gelangen. Nachteilig wirken sich in dieser Konstruktion die mit hohem Arbeitsaufwand sowohl in die Wellen als auch in das Gehäuseteil einzubringenden Ringnuten aus.

Eine weitere Drehdurchführung ist aus DE 42 03 964 C1 bekannt. Danach stehen Druckmittelleitungen eines Stators über Ringkanäle und Stichbohrungen mit den Druckmittelleitungen eines Rotors in Verbindung. Um Leckage zwischen den axial zueinander versetzten Ringkanälen zu vermeiden sind zwischen ihnen Dichtringe angebracht, wodurch eine dichtende Verbindung zwischen Stator und Rotor hergestellt wird. Durch den Einsatz der Dichtringe wird die Montage der mit Einschnürungen versehenen Welle erheblich erschwert. Weiterhin müssen am Übergang zwischen Einstichen und Welle Radien bzw. konische Übergänge vorgesehen werden, um eine Montage zu ermöglichen. Dies erfordert wiederum kostenaufwändige Nachbearbeitungen.

### Zusammenfassung der Erfindung

Der Erfindung liegt daher die Aufgabe zu Grunde, diese geschilderten Nachteile zu vermeiden und somit eine Drehdurchführung für Druckmittel zu schaffen, die kostengünstig und in Leichtbauweise hergestellt werden kann und einfach zu montieren ist.

Erfindungsgemäß wird diese Aufgabe dadurch gelöst, dass zwischen dem Anschlussteil und der Welle eine Zentralhülse angebracht ist, die druckdicht und drehfest mit dem Anschlussteil verbunden ist und erste zylindrische Ringabschnitte aufweist, deren Mantelfläche mit ringförmig umlaufenden in Umfangsrichtung regelmäßig beabstandeten Öffnungen versehen ist, wobei die Öffnungen vollständig von den Ringnuten des Außenkanals überdeckt werden, wobei die ersten zylindrischen Ringabschnitte durch zweite zylindrische Ringabschnitte, die keine Öffnungen aufweisen, in axialer Richtung voneinander getrennt sind, dass die radialen Bohrungen als Langloch ausgestaltet sind und die Länge so gewählt ist, dass in jeder Stellung der Welle relativ zur Zentralhülse mindestens eine Öffnung vollständig mit dem Langloch fluchtet und dass die Dichtringe in Ringnuten der Welle angebracht sind und mit den zweiten zylindrischen Ringabschnitten der Zentralhülse zusammenwirken.

Das Druckmittel wird durch die Druckmittelanschlüsse in die Ringkanäle des Anschlußstückes geleitet. Von dort gelangt es über die Öffnungen der ersten Ringabschnitte und die als Langloch ausgeführte Bohrung in die Druckmittelleitung der Welle. Denkbar ist in dieser Konfiguration natürlich auch eine Umkehr des Druckmittelflusses.

Durch das Einfügen einer Zentralhülse zwischen Welle und Anschlussstück können die Anforderungen an die Belastbarkeit der Anschlusstücke deutlich gesenkt werden. Dadurch, dass die Belastung einer sich relativ zum Anschlussstück drehenden Welle von der Zentralhülse getragen werden, muss das Anschlussstück nur noch die Aufgabe erfüllen Ringkanäle bereitzustellen durch die das Druckmittel vom Anschlussstück in die Druckmittelleitungen der Welle geführt werden kann. Konkret ist es dadurch möglich das Anschlussstück kostengünstig und in Leichtbauweise auszubilden.

Um eine Leckage des Druckmittels in axialer Richtung zwischen Welle und Anschlussstück zu verhindern bzw. zu minimieren sind Stahldichtringe zwischen diesen beiden Bauteilen vorgesehen. Diese sind in ringförmig umlaufenden Einstichen in der Welle positioniert. Bei der Montage wird die Welle in das Anschlußteil geschoben, wobei die Stahldichtringe in radialer Richtung gestaucht werden. Passieren die Stahldichtringe eine Ringnut des Anschlußteils schnappen diese auf. Um die Montage zu ermöglichen müssen die Seitenwände der Ringnuten des Anschlußstücke mit Übergängen in Form von eines Radius, einer Hyperbel, einer Parabel, eines Konus oder dergleichen versehen werden. Dies macht eine aufwändige und kostenintensive Nachbearbeitung des Anschlussteils notwendig. In der erfindungsgemäßen Ausführung einer Drehdurchführung sind die Stahldichtringe in ringförmig umlaufenden Einstichen in der Welle angebracht. Die Zentralhülse ist derart im positioniert, dass die ersten zylindrischen Ringabschnitte die Ringnuten radial nach innen begrenzen. Der Dichtschluss zwischen Welle und Anschlußteil wird durch das Zusammenwirken der in den Einstichen liegenden Dichtringe mit der Mantelinnenfläche der Zentralhülse bewirkt. Beim Einführen der Welle in die Zentralhülse werden die Dichtringe zusammengepresst. Bei der weiteren axialen Verschiebung der Welle, mit den darauf angeordneten Dichtringen, in Richtung axialer Endlage werden die Dichtringe nun nicht an den Ringnuten, sondern an den ersten zylindrischen Ringabschnitten mit ringförmig umlaufenden Öffnungen vorbei geführt ,wodurch ein Aufschnappen der Stahldichtringe verhindert wird. Dadurch kann die aufwändige Nachbearbeitung der Seitenflächen der Ringnuten entfallen

Durch die ringförmig umlaufenden gleichmäßig beabstandeten Öffnungen in den ersten zylindrischen Ringabschnitten wird ein ständiger Kontakt zwischen den als Langlöchern ausgeführten radialen Bohrungen in der Welle und den dazugehörigen Ringkanälen hergestellt und damit ein kontinuierlicher Druckmittelfluß während des Betriebs gewährleistet

In einer vorteilhaften Ausführung der Erfindung besteht das Anschlussteil aus einer oder mehreren Hülsen, die durch einen Umformprozess aus Blechteilen gefertigt sind. Durch den Einsatz von Blechteilen, die durch einen Umformprozess in die gewünschte hülsenförmige Form gebracht werden, lässt sich das Anschlussteil in Leichtbauweise herstellen. Einen weiteren Vorteil stellt die kostengünstige und leicht zu handhabende Fertigungsmethode dar.

In einer weiteren vorteilhaften Ausführung der Erfindung ist die Zentralhülse aus einem Blechteil durch einen Umformprozess gefertigt und die Öffnungen nach der Formgebung aus dieser ausgestanzt. Durch die Verwendung einer aus einem Blechteil durch Umformen hergestellten Zentralhülse kann das Gewicht dieser Anordnung auf ein Minimum reduziert werden. Weiterhin werden durch die Verwendung eines leicht zu handhabenden Herstellungsprozesses die Produktionskosten deutlich reduziert. Ein weiterer Vorteil ergibt sich daraus, dass Drehdurchführungen mit unterschiedlich vielen Druckmittelleitungen ohne umständliches Umstellen des Produktionsweges hergestellt werden können.

In einer ebenfalls vom Schutzumfang dieser Erfindung erfassten Ausführungsform besteht das Anschlussteil aus einer Winkelhülse pro Druckmittelanschluss, wobei die Wandung der Winkelhülse im Längsschnitt U-förmig ausgebildet ist und somit eine Ringnut bildet. Durch dieses Baukastenprinzip ist es möglich unterschiedliche Drehdurchführungen, die sich durch die Anzahl der Druckmittelleitungen bzw. der Druckmittelanschlüsse unterscheiden, kostengünstig, ohne aufwändige Umstellung des Produktionsprozesses herzustellen.

Ebenfalls denkbar ist, dass das Anschlussteil aus einer äußeren Hülse und mehreren Winkelhülsen besteht, wobei die Winkelhülsen zwischen den ersten zylindrischen Abschnitten auf der Zentralhülse angebracht sind, die Winkelhülsen von der äußeren Hülse übergriffen werden und die Verbindungen zwischen äußerer Hülse und Zentralhülse, zwischen äußerer Hülse und den Winkelhülsen und zwischen den Winkelhülsen und der Zentralhülse druckdicht ausgeführt sind. In dieser Ausgestaltung der Erfindung werden die Ringkanäle, die die Druckmittelanschlüsse mit den Druckmittelleitungen verbinden, in radialer Richtung durch die Zentralhülse bzw. die äußere Hülse definiert. Die Begrenzungen in axialer Richtung werden durch die Winkelhülsen realisiert. Druckmittel, das beispielsweise in einer axialen Druckmittelleitung der Welle geführt wird, kann über die als Langloch ausgeführte radiale Bohrung und die mit der radialen Bohrung kommunizierenden Öffnungen des ersten zylindrischen Ringabschnitts der Zentralhülse in den Ringkanal zwischen Zentralhülse, äußerer Hülse und Winkelhülse einströmen und von dort in den Druckmittelanschluss gelangen. In dieser Ausgestaltung der Erfindung ist es ebenfalls möglich durch geringfügige Änderungen in der Ausgestaltungsform der äußeren Hülse Drehdurchführungen mit unterschiedlich vielen Druckmittelleitungen, bei einer minimalen Anzahl von verschiedenen Einzelteilen, herzustellen.

Weiterhin ist vorgesehen, dass die Winkelhülsen mittels Presspassung auf die Zentralhülse aufgebracht werden. Dadurch wird eine druckdichte Verbindung zwischen diesen beiden Bauteilen hergestellt.

In einer weiteren Konkretisierung der Erfindung ist die Wandung der Winkelhülsen im Längsschnitt U-förmig ausgebildet, wobei die Schenkel des U's radial von der Zentralhülse zur äußeren Hülse gerichtet sind. Dabei ist es denkbar, dass das Verbindungsstück der beiden Schenkel entweder an der Zentralhülse oder an der äußeren Hülse anliegt. Dadurch wird die Stabilität dieser Anordnung gegenüber einer einschenkligen Winkelhülse erhöht.

In einer weiteren Ausführungsform sind die Winkelhülsen mit je einem Dichtring versehen, wodurch eine druckdichte Verbindung zwischen Winkelhülse und Zentralhülse oder äußerer Hülse hergestellt wird. Dabei kann die durch die U-förmige Wandung der Winkelhülse definierte Ringnut als Aufnahmeraum für den Stahldichtring genutzt werden.

In weiteren Ausführungsformen der Erfindung können die Verbindungen zwischen Zentralhülse und äußerer Hülse, Zentralhülse und Winkelhülsen und äußerer Hülse und Winkelhülsen in Form von Pressverbindungen oder in Form von ringförmig umlaufenden Schweißverbindungen hergestellt werden.

Vorteilhafterweise sind in der Mantelfläche der Zentralhülse zusätzliche sich in Umfangsrichtung erstreckende Langlöcher vorgesehen, die von je einem zusätzlichen Ringkanal übergriffen werden. Durch diese Anordnung kann Leckagedruckmittel, welches in axialer Richtung entlang der Welle geführt wird, über die Langlöcher entweichen und über einen Ringkanal und eine Druckmittelleitung abgeführt werden.

### Kurze Beschreibung der Zeichnungen

Weitere Merkmale der Erfindung ergeben sich aus den nachfolgenden Beschreibungen und aus den Zeichnungen, in der Ausführungsbeispiele der Erfindung vereinfacht dargestellt sind. Es zeigen:
- Figur 1: eine Teilansicht einer erfindungsgemäßen Drehdurchführung im Längsschnitt,
- Figur 2: einen Längsschnitt durch das Nabenteil einer erfindungsgemäßen Drehdurchführung,
- Figur 3: einen Querschnitt durch eine erfindungsgemäße Drehdurchführung nach III-III aus Figur 1,
- Figur 4: einen Teilausschnitt der Zentralhülse im Bereich eines ersten zylindrischen Abschnitts in Draufsicht,
- Figur 5: einen Längsschnitt durch eine weitere Ausführungsform eines Nabenteils einer erfindungsgemäßen Drehdurchführung.

### Ausführliche Beschreibung der Zeichnungen

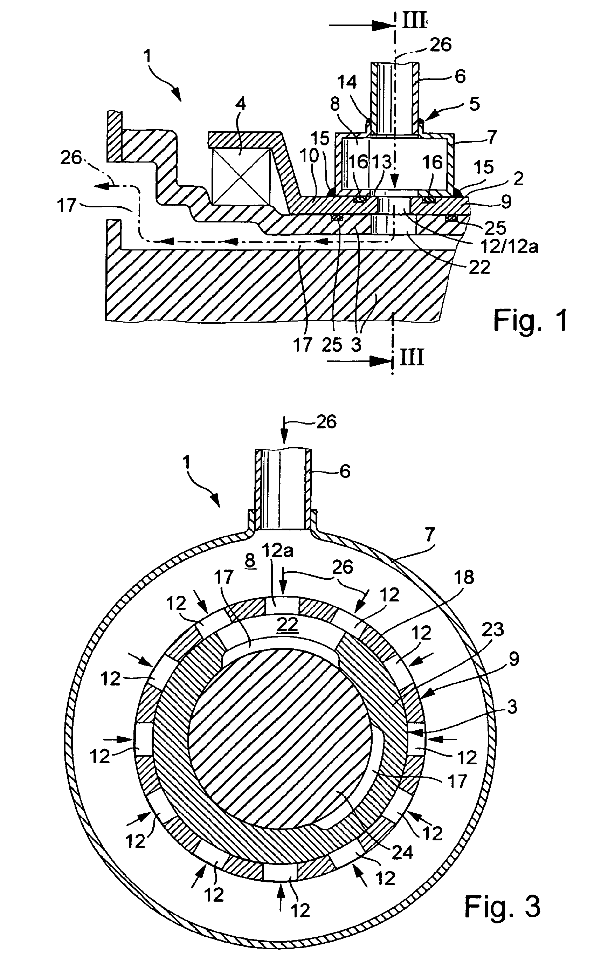

In der Figur 1 ist eine Teilansicht einer erfindungsgemäßen Drehdurchführung 1 im Längsschnitt dargestellt. Diese besteht aus einem Nabenteil 2, einer Welle 3 und einem Lager 4. Nabenteil 2 und Welle 3 sind über das Lager 4 gegeneinander drehbar um eine gemeinsame Drehachse gelagert. Für den Erfindungsgedanken ist es dabei unerheblich, ob das Nabenteil 1 feststeht und die Welle 2 eine rotative Bewegung ausführt, oder die Welle 1 feststeht und das Nabenteil 2 eine rotative Bewegung ausführt oder ob beide Bauteile eine rotative Bewegung ausführen, wobei die Drehzahlen der beiden Bauteile unterschiedlich sein können.

Das Nabenteil 2 setzt sich aus einer Zentralhülse 9 und einem Anschlussteil 5, bestehend aus einem Druckmittelanschluss 6 und einer ersten Winkelhülse 7, zusammen. Die erste Winkelhülse 7 wird kraftschlüssig auf die Zentralhülse 9 aufgebracht, wobei die Wandung der ersten Winkelhülse 7, die im Querschnitt U-förmig ausgebildet ist, zusammen mit der äußeren Mantelfläche 13 der Zentralhülse 9 einen Ringkanal 8 bildet, der die Zentralhülse 9 umgreift. Um eine druckdichte Verbindung zwischen Druckmittelanschluss 6 und Ringkanal 8 herzustellen ist dieser mit einem seiner Enden mittels Presspassung und einer Schweißnaht 14 mit dem Außenumfang der ersten Winkelhülse 7 verbunden.

In der Figur 1 ist nur ein Druckmittelanschluß dargestellt, der in Flußverbindung mit einer Druckmittelleitung steht. Es ist leicht ersichtlich, daß durch mehrfaches Duplizieren der Bestandteile beliebig viele Druckmittelanschlüsse mit Druckmittelleitungen verbunden werden können.

Die Zentralhülse 9 setzt sich aus einem hohlzylindrischen Teil 10 und einem topfförmigen Fortsatz 11 zusammen. Der topfförmige Fortsatz 11 dient zur Aufnahme eines Lagers, wodurch die Zentralhülse 9 drehbar mit der Welle 3 verbunden werden kann. Der zylindrische Teil 10 ist mit Öffnungen 12 versehen, die von der ersten Winkelhülse 7 vollständig überdeckt werden. Dadurch ist gewährleistet, dass die Öffnungen 12 in Flussverbindung mit dem Ringkanal 8 stehen. Sowohl die Verbindung zwischen Druckmittelanschluss 6 und erster Winkelhülse 7, als auch die Verbindung zwischen Zentralhülse 9 und erster Winkelhülse 7 sind druckdicht ausgeführt. Dies kann durch Schweißverbindungen 14, 15 oder mit Hilfe von Dichtringen 16 erfolgen.

Die Welle 3 ist mit Druckmittelleitungen 17 versehen, die über radiale Bohrungen 22 und die Öffnung 12 der Zentralhülse 9 in Flussverbindung mit dem Ringkanal 8 stehen.

In einer vorteilhaften Ausführung der Erfindung bestehen die Zentralhülse 9 und/oder die erste Winkelhülse 7 aus einem Blechteil, welches mit Hilfe eines Umformprozesses in die gewünschte Form gebracht wird.

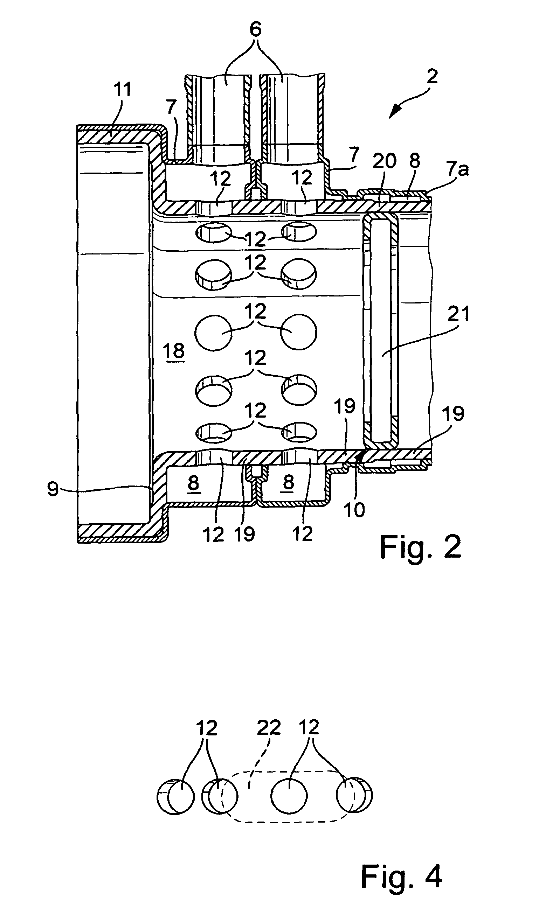

Figur 2 zeigt einen Längsschnitt durch eine bevorzugte Ausführungsform des Nabenteils 2 einer erfindungsgemäßen Drehdurchführung. Dabei handelt es sich um eine Ausführungsform, in der zwei voneinander getrennte Druckmittelströme übertragen werden können. Es sind erste Winkelhülsen 7 gezeigt, die druckdicht auf einer Zentralhülse 9 angebracht sind, wobei die Innenseite der Winkelhülsen zusammen mit den Außenflächen der Zentralhülse 9 Ringkanäle 8 bilden, die in Flussverbindung mit Druckmittelanschlüssen 6 stehen, wobei jeweils ein Ende der Druckmittelanschlüsse mit dem Außenumfang einer Winkelhülse in Verbindung steht. Das hohlzylindrische Teil 10 der Zentralhülse 9 besteht aus ersten zylindrischen Ringabschnitten 18, deren Mantelflächen mit ringförmig umlaufenden, in Umfangsrichtung regelmäßig beabstandeten Öffnungen 12 versehen ist. Das hohlzylindrische Teil 10 der Zentralhülse 9 ist pro Druckmittelanschluss 6 bzw. erster Winkelhülse 7 mit einem ersten zylindrischen Ringabschnitt 18 versehen, wobei jeder erste zylindrische Ringabschnitt 18 von einer ersten Winkelhülse 7 übergriffen wird, so dass deren Öffnungen 12 komplett innerhalb des Ringkanals 8 liegen.

In axialer Richtung werden die ersten zylindrischen Ringabschnitte durch zweite zylindrische Ringabschnitte 19, ohne Öffnungen, begrenzt.

Weiterhin besteht das hohlzylindrische Teil 10 der Zentralhülse 9 aus dritten zylindrischen Ringabschnitten 20, in deren Mantelflächen sich in Umfangsrichtung erstreckende Langlöcher 21 vorgesehen sind. Die dritten zylindrischen Ringabschnitte 20 werden von zweiten Winkelhülsen 7a übergriffen, wobei die axiale Ausdehnung der Langlöcher 21 so gewählt ist, dass diese von der Winkelhülse 7 komplett überdeckt werden. Die zweite Winkelhülse 7a bildet im Zusammenspiel mit der Außenfläche des dritten zylindrischen Ringabschnitts 20 einen weiteren Ringkanal 8.

Obwohl hier eine Ausführungsform einer erfindungsgemäßen Drehdurchführung mit zwei Druckmittelanschlüssen und zwei Druckmittelleitungen dargestellt ist beschränkt sich die Erfindung selbstverständlich nicht auf diese spezielle Ausführungsform. Wie für den Fachmann leicht ersichtlich, ist es natürlich möglich, in Abhängigkeit von der Länge der Zentralhülse 9 und der Ausführungsform der Welle 3 beliebig viele Druckmittelanschlüsse 6 mit Druckmittelleitungen 17 zu verbinden. Weiterhin ist es natürlich möglich die Zentralhülse 9 mit mehreren dritten zylindrischen Ringabschnitten 20 zu versehen.

Figur 3 zeigt einen Querschnitt durch eine erfindungsgemäße Drehdurchführung nach Figur 1 entlang der Linie III-III. Deutlich zu erkennen ist ein Druckmittelanschluss 6, eine erste Winkelhülse 7, die im Zusammenspiel mit einem ersten zylindrischen Ringabschnitt 18 der Zentralhülse 9 den Ringkanal 8 bildet. Deutlich zu erkennen sind die ringförmig angeordneten, in Umfangsrichtung regelmäßig beabstandeten Öffnungen 12 des ersten zylindrischen Ringabschnitts 18 der Zentralhülse 9.

In der dargestellten Ausführungsform besteht die Welle 3 aus einer Hohlwelle 23, die am Innenmantel mit Druckmittelleitungen 17, in Form von sich axial erstreckenden Ausnehmungen, versehen ist. Innerhalb der Hohlwelle 23 ist eine massive Welle 24 angeordnet, wobei eine druckdichte Verbindung zwischen Außenfläche der massiven Welle 24 und Innenfläche der Hohlwelle 23 besteht. Die Außenfläche der massiven Welle 24 bildet also die radial nach innen gewandte Begrenzung der Druckmittelleitungen 17. Weiterhin wird durch den druckdichten Kontakt zwischen Hohlwelle 23 und massiver Welle 24 verhindert, dass Druckmittel zwischen den verschiedenen Druckmittelleitungen ausgetauscht werden kann.

Die Verbindung zwischen der Druckmittelleitung 17 und dem dazugehörigen Ringkanal 8 wird über die Öffnungen 12 der Zentralhülse 9 und eine radiale Bohrung 22 in der Hohlwelle 23 hergestellt, wobei die radial Bohrung 22 als Langloch ausgebildet ist. Jede Druckmittelleitung 17 ist mit einer als Langloch ausgeführten radialen Bohrung 22 versehen. Dabei sind die verschiedenen radialen Bohrungen 22 gegeneinander axial versetzt, wobei jede radiale Bohrung 22 mit den Öffnungen 12 eines ersten zylindrischen Ringabschnitts 18 kommuniziert. Um die Leckage zwischen zwei benachbarten ersten zylindrischen Ringabschnitten zu minimieren sind im Bereich der zweiten zylindrischen Ringabschnitte 19 Dichtringe 25 zwischen der Zentralhülse 9 und der Hohlwelle 23 vorgesehen (Figur 1).

Um zu gewährleisten, dass bei jeder Stellung der Welle 3 relativ zur Zentralhülse 9 Druckmittelfluss stattfinden kann ist die radiale Bohrung 22 derart ausgestaltet, dass mindestens eine Öffnung 12 vollständig über der als Langloch ausgeführten radialen Bohrung 22 liegt. Dies ist sowohl in Figur 3 als auch in Figur 4 dargestellt.

Obwohl in Figur 3 eine Welle 3 bestehend aus einer Hohlwelle 23 und einer massiven Welle 24 dargestellt ist versteht sich von selbst, dass der Anwendungsbereich der erfindungsgemäßen Drehdurchführung nicht auf solche Konfigurationen beschränkt ist. Denkbar wäre natürlich auch, dass die axial verlaufenden Ausnehmungen, die die Druckmittelleitungen 17 bilden in den Außenmantel der massiven Welle eingebracht sind. Weiterhin wären konzentrisch angeordnete Hohlwellen denkbar, zwischen denen mehrere Druckmittelleitungen angeordnet sind. Möglich wären in diesem Zusammenhang auch als Ringkanäle ausgeführte Druckmittelleitungen. Weiterhin sei noch auf massive Wellen mit axialen Bohrungen und ähnlichem hingewiesen.

Anhand der Figuren 1 und 3 soll im Folgenden die Funktionsweise der Drehdurchführung erläutert werden. Dabei wird ein Druckmittelfluss vom Druckmittelanschluss 6 zur Druckmittelleitung 17 angenommen. Natürlich kann mit dieser Anordnung das Druckmittel auch in umgekehrte Richtung geleitet werden.

Das Druckmittel kann entlang des mit Pfeilen 26 bezeichneten Pfades fließen. Über den Druckmittelanschluss 6 gelangt es in den Ringkanal 8. Vom Ringkanal 8 aus werden die Öffnungen 12 der Zentralhülse 9 beaufschlagt. Es sei noch einmal darauf hingewiesen, dass die als Langloch ausgeführte radiale Bohrung immer mit mindestens einer der Öffnungen 12 kommuniziert. Über die jeweilige Öffnung 12a gelangt das Druckmittel nun über die radiale Bohrung 22 in die Druckmittelleitung 17. Dies gilt natürlich für jedes System bestehend aus Druckmittelanschluss 6, Ringkanal 8, Öffnung 12, radiale Bohrung 22 und Druckmittelleitung 17 unabhängig von den anderen vorhandenen Systemen. Dadurch ist es möglich verschiedene Druckmittelleitungen 17 mit verschiedenen Drücken zu beaufschlagen.

Eventuell entweichendes Leckagedruckmittel, welches in axialer Richtung zwischen Welle 3 und Zentralhülse 9 fließt, wird über die Langlöcher 21 in Ringkanäle 8 geleitet und kann von dort entweder über Druckmittelleitungen 17 in der Welle 3 oder einem nicht dargestellten Druckmittelanschluß an der Winkelhülse 7a abgeführt werden.

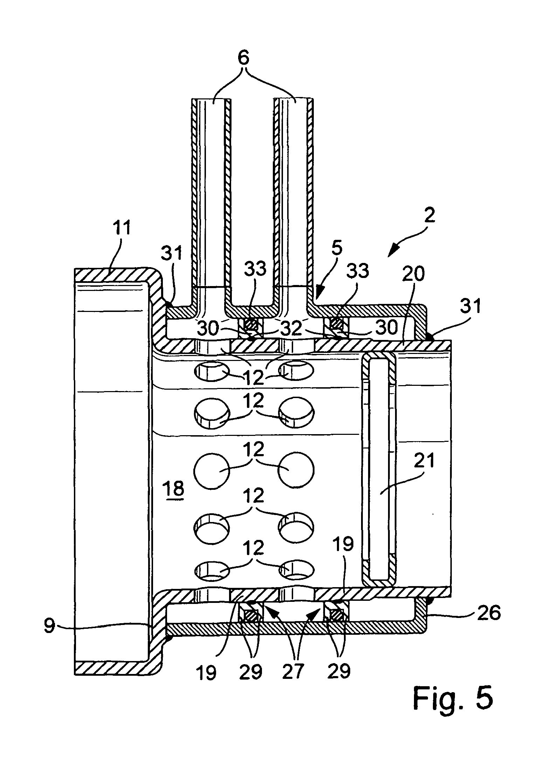

Figur 5 zeigt einen Längsschnitt durch eine weitere Ausführungsform eines Nabenteils 2 einer erfindungsgemäßen Drehdurchführung. Dieses besteht wiederum aus einer Zentralhülse 9, mit ersten zylindrischen Ringabschnitten 18, deren Mantelfläche mit ringförmig umlaufenden, in Umfangsrichtung regelmäßig beabstandeten Öffnungen 12 versehen ist, zweiten zylindrischen Abschnitten 19 in axialer Richtung jeweils zwischen ersten zylindrischen Ringabschnitten 18, dritten zylindrischen Ringabschnitten 20, deren Mantelfläche mit sich in Umfangsrichtung erstreckenden Langlöchern 21 versehen ist und einem topfförmigen Fortsatz 11 zur Aufnahme eines Lagers. Die Ausführungsform gemäß Figur 5 unterscheidet sich gegenüber der aus Figur 1 durch die Ausgestaltung des Anschlussteils 5. Im vorliegenden Fall besteht dieses aus mehreren dritten Winkelhülsen 27 und einer äußeren Hülse 28.

In einer bevorzugten Ausführungsform sind die dritten Winkelhülsen 27 und/oder die äußere Hülse 28 aus einem Blechteil durch einen Umformprozess hergestellt.

Die dritten Winkelhülsen 27 sind kraftschlüssig auf der Außenfläche der zweiten zylindrischen Ringabschnitte 19 befestigt und werden von der äußeren Hülse 28 übergriffen, wobei eine kraftschlüssige Verbindung mit den dritten Winkelhülsen 27 vorgesehen ist. In der dargestellten Ausführungsform ist die Wandung der dritten Winkelhülsen 27 im Längsschnitt U-förmig ausgeführt, wobei die Schenkel 29 der U-förmigen Wandung radial nach außen, von der Zentralhülse 9 zur äußeren Hülse 28 zeigen. Je ein Verbindungsteil 30 koppelt die beiden Schenkel 29 einer dritten Winkelhülse. Denkbar sind zwei Ausführungsformen. Zum einen ein radial nach außen offenes U (in Figur 5 dargestellt) oder ein radial nach innen offenes U (nicht dargestellt). Im ersten Fall liegt das Verbindungsteil 30 an der Zentralhülse 9, im zweiten Fall an der äußeren Hülse 28 an. Die druckdichte Verbindung zwischen Zentralhülse 9 und äußerer Hülse 28 kann über ringförmig umlaufende Schweißverbindungen 31 an den Berührungspunkten der beiden Hülsen hergestellt werden. Um axiale Leckage des Druckmittels zu verhindern sind neben einer kraftschlüssigen Presspassung, ringförmig umlaufende Schweißverbindungen 32 zwischen dem Verbindungsteil 30 der dritten Winkelhülsen 27 und der äußeren Hülse 28 und bzw. der Zentralhülse 9 vorgesehen. Die jeweils andere Verbindungsstelle kann zusätzlich mit Dichtringen 33, die zwischen den Schenkeln 29 der dritten Winkelhülsen 27 angeordneten sind, gegen Leckage gesichert werden.

Die Funktionsweise dieser Ausführungsform ist identisch mit der oben dargestellten, mit der Ausnahme, daß die Ringkanäle 8 in diesem Fall durch die Zentralhülse 9, die äußere Hülse 28 und die Schenkel 29 der dritten Winkelhülsen 27 gebildet werden.

### Bezugszahlenliste

- 1: Drehdurchführung
- 2: Nabenteil
- 3: Welle
- 4: Lager
- 5: Anschlußteil
- 6: Druckmittelanschluß
- 7: Erste Winkelhülse
- 7a: Zweite Winkelhülse
- 8: Ringkanal
- 9: Zentralhülse
- 10: Hohlzylindrisches Teil
- 11: Topfförmiger Fortsatz
- 12: Öffnung
- 13: Äußere Mantelfläche
- 14: Schweißverbindung
- 15: Schweißverbindung
- 16: Dichtring
- 17: Druckmittelleitung

- 18: Erster zylindrischer Ringabschnitt
- 19: Zweiter zylindrischer Ringabschnitt
- 20: Dritter zylindrischer Ringabschnitt
- 21: Langloch
- 22: radiale Bohrung
- 23: Hohlwelle
- 24: Massive Welle
- 25: Dichtring
- 26: Druckmittelweg
- 27: Dritte Winkelhülse
- 28: äußere Hülse
- 29: Schenkel
- 30: Verbindungsteil
- 31: Schweißverbindung
- 32: Schweißverbindung
- 33: Dichtring

## Patentansprüche

1. Drehdurchführung (1) zur Verbindung von relativ zueinander drehenden, in einer Welle (3) angeordneten Druckmittelleitungen (17) einerseits und Druckmittelanschlüssen (6) andererseits, durch welche ein flüssiges Druckmittel geführt wird, bestehend aus
- einer Welle (3),
- mindestens einer Druckmittelleitung(17) in Form eines sich axial innerhalb der Welle (3) erstreckenden Kanals,
- einer radialen Bohrung (22) pro Druckmittelleitung (17) von der Oberfläche der Welle (3) zur Druckmittelleitung (17), wobei die Bohrungen (22) der verschiedenen Druckmittelleitungen (17) relativ zueinander in axialer Richtung versetzt sind,
- einem Anschlußteil (5), welches die Welle (3) im Bereich der Bohrungen (22) umfaßt, wobei das Anschlußteil (5) im Bereich einer jeden Bohrung (22) mit einer Ringnut (8) ausgebildet ist, die die Bohrung (22) komplett überdeckt, so daß zusammen mit der Welle (3) ein Ringkanal (8) entsteht,
- einem Druckmittelanschluß (6) pro Druckmittelleitung (17), der druckdicht mit jeweils einem der Ringkanäle (8) in Verbindung steht und diesen mit Druckmittel versorgt und
- Dichtringen(25), die die Ringkanäle (8) gegeneinander abdichten,
**dadurch gekennzeichnet, daß**
- zwischen dem Anschlußteil (5) und der Welle (3) eine Zentralhülse (9) angebracht ist, die druckdicht und drehfest mit dem Anschlußteil (5) verbunden ist und erste zylindrische Ringabschnitte (18) aufweist, deren Mantelfläche mit ringförmig umlaufenden, in Umfangsrichtung regelmäßig beabstandeten Öffnungen (12) versehen ist, wobei die Öffnungen (12) vollständig von den Ringnuten des Anschlußteils überdeckt werden,
wobei die ersten zylindrischen Ringabschnitte (18) durch zweite zylindrischen Ringabschnitte (19), die keine Öffnungen aufweisen, in axialer Richtung voneinander getrennt sind,
- die radialen Bohrungen (22) als Langloch ausgestaltet sind, und die Länge so gewählt ist, dass in jeder Stellung der Welle (3) relativ zur Zentralhülse (9) mindestens eine Öffnung (12) vollständig mit der radialen Bohrung (22) fluchtet und
- die Dichtringe (25) in Einstichen in der Welle (3) angebracht sind und mit den zweiten zylindrischen Ringabschnitten (19) der Zentralhülse (9) zusammenwirken.

2. Drehdurchführung (1) nach Anspruch 1 **dadurch gekennzeichnet, dass** das Anschlußteil (5) aus einer oder mehreren Hülsen besteht, die durch einen Umformprozeß aus Blechteilen gefertigt sind.

3. Drehdurchführung (1) nach Anspruch 1 **dadurch gekennzeichnet, dass** die Zentralhülse (9) aus einem Blechteil durch einen Umformprozeß gefertigt wird und die Öffnungen (12) nach der Formgebung ausgestanzt werden.

4. Drehdurchführung (1) nach Anspruch 1 **dadurch gekennzeichnet, dass** das Anschlußteil (5) aus einer ersten Winkelhülse (7) pro Druckmittelanschluß (6) besteht, wobei die Wandung der ersten Winkelhülse (7) im Querschnitt U-förmig ausgebildet ist und somit eine Ringnut bildet.

5. Drehdurchführung (1) nach Anspruch 1 **dadurch gekennzeichnet, dass** das Anschlußteil (5) aus einer äußeren Hülse (28) und mehreren dritten Winkelhülsen (27) besteht, wobei die dritten Winkelhülsen (27) zwischen den ersten zylindrischen Abschnitten (18) auf der Zentralhülse (9) angebracht sind, die dritten Winkelhülsen (27) von der äußeren Hülse (28) übergriffen werden und die Verbindungen zwischen äußerer Hülse (28) und Zentralhülse (9), zwischen äußerer Hülse (28) und den dritten Winkelhülsen (27) und zwischen den dritten Winkelhülsen (27) und der Zentralhülse (9) druckdicht ausgeführt sind.

6. Drehdurchführung (1) nach Anspruch 5 **dadurch gekennzeichnet, dass** die dritten Winkelhülsen (27) mittels Presspassung auf die Zentralhülse (9) aufgebracht werden.

7. Drehdurchführung (1) nach Anspruch 5 **dadurch gekennzeichnet, dass** die Wandung der dritten Winkelhülsen (27) im Längsschnitt U-förmig ausgeführt ist.

8. Drehdurchführung (1) nach Anspruch 6 **dadurch gekennzeichnet, dass** die dritten Winkelhülsen (27) mit je einem Dichtring (33) versehen sind, wodurch eine dichtende Verbindung zwischen dritter Winkelhülse (27) und Zentralhülse (9) oder äußerer Hülse (28) hergestellt wird.

9. Drehdurchführung (1) nach Anspruch 5 **dadurch gekennzeichnet, dass** die äußere Hülse (28) an ihren axialen Enden durch ringförmig umlaufende Schweißverbindungen (31) mit der Zentralhülse druckdicht verbunden ist.

10. Drehdurchführung (1) nach Anspruch 5 **dadurch gekennzeichnet, dass** die dritten Winkelhülsen (27) mit der äußeren Hülse (28) durch jeweils eine ringförmig umlaufende Schweißnaht verbunden sind.

11. Drehdurchführung nach Anspruch 5 **dadurch gekennzeichnet, dass** die dritten Winkelhülsen (27) mit der Zentralhülse (9) durch jeweils eine ringförmig umlaufende Schweißnaht (32) verbunden sind.

12. Drehdurchführung (1) nach Anspruch 1 **dadurch gekennzeichnet, dass** in der Mantelfläche der Zentralhülse (9) zusätzlich sich in Umfangsrichtung erstreckende Langlöcher (21) vorgesehen sind, die von je einem zusätzlichen Ringkanal (8) übergriffen werden.

## Claims

1. Rotary transmission leadthrough (1) for connecting relatively rotating pressure medium ducts (17) arranged in a shaft (3) to pressure medium connections (6) through which a liquid pressure medium is conducted, comprising
- a shaft (3),
- at least one pressure medium duct (17) in form of a channel extending axially within the shaft (3),
- one radial bore (22) per pressure medium duct (17), which bore (22) extends from the surface of the shaft (3) to the pressure medium duct (17), the bores (22) of the different pressure medium ducts (17) being arranged offset to one another in axial direction,
- a connecting piece (5) which surrounds the shaft (3) in the region of the bores (22), said connecting piece (5) being configured in the region of each bore (22) with an annular groove (8) which covers the bore (22) completely so that, in conjunction with the shaft (3), an annular channel (8) is formed,
- one pressure medium connection (6) per pressure medium duct (17) which pressure medium connection (6) communicates in a pressure-tight manner with a respective one of the annular channels (8) to supply this with pressure medium, and
- sealing rings (25) which seal the annular channels (8) from one another,
**characterised in that**
- a central sleeve (9) is provided between the connecting piece (5) and the shaft (3) and is connected pressure-tight and rotationally fast to the connecting piece (5), the central sleeve (9) comprises first cylindrical ring sections (18), the peripheral surfaces of which are provided with openings (12) arranged equally spaced in peripheral direction from one another annularly around the entire periphery, said openings (12) are completely covered by the annular grooves of the connecting piece, the first cylindrical ring sections (18) being separated from one another in axial direction by second cylindrical ring sections (19) which comprise no openings,
- the radial bores (22) are configured as oblong holes and their length is chosen such that, in every position of the shaft (3) relative to the central sleeve (9), at least one opening (12) is fully aligned to the radial bore (22), and
- the sealing rings (25) are mounted in undercuts in the shaft (3) and cooperate with the second cylindrical ring sections (19) of the central sleeve (9).

2. Rotary transmission leadthrough (1) according to claim 1, **characterised in that** the connecting piece (5) consists of one or more sleeves that are made by a shaping procedure out of sheet metal parts.

3. Rotary transmission leadthrough (1) according to claim 1, **characterised in that** the central sleeve (9) is made out of a sheet metal part by a shaping procedure and the openings (12) are punched out after the shaping.

4. Rotary transmission leadthrough (1) according to claim 1, **characterised in that** the connecting piece (5) consists of a first angled sleeve (7) per pressure medium connection (6), the wall of the first angled sleeve (7) having a U-shaped configuration in cross-section and thus forming an annular groove.

5. Rotary transmission leadthrough (1) according to claim 1, **characterised in that** the connecting piece (5) consists of an outer sleeve (28) and a plurality of third angled sleeves (27) which are positioned between the first cylindrical sections (18) on the central sleeve (9), the third angled sleeves (27) are engaged over by the outer sleeve (28) and the connections between the outer sleeve (28) and the central sleeve (9), between the outer sleeve (28) and the third angled sleeves (27) and between the third angled sleeves (27) and the central sleeve (9) are made pressure-tight.

6. Rotary transmission leadthrough (1) according to claim 5, **characterised in that** the third angled sleeves (27) are mounted on the central sleeve (6) by an interference fit.

7. Rotary transmission leadthrough (1) according to claim 5, **characterised in that** the wall of the third angled sleeves (27) is configured with a U-shape in longitudinal section.

8. Rotary transmission leadthrough (1) according to claim 6, **characterised in that** each of the third angled sleeves (27) is provided with a sealing ring (33) which establishes a sealed connection between the third angled sleeve (27) and the central sleeve (9) or the outer sleeve (28).

9. Rotary transmission leadthrough (1) according to claim 5, **characterised in that**, at its axial ends, the outer sleeve (28) is connected pressure-tight to the central sleeve (9) by peripherally continuous annular weld joints (31).

10. Rotary transmission leadthrough (1) according to claim 5, **characterised in that** each of the third angled sleeves (27) is connected to the outer sleeve (28) by a peripherally continuous annular weld seam.

11. Rotary transmission leadthrough (1) according to claim 5, **characterised in that** each of the third angled sleeves (27) is connected to the central sleeve (9) by a peripherally continuous annular weld seam (32).

12. Rotary transmission leadthrough (1) according to claim 1, **characterised in that** oblong holes (21) extending in peripheral direction are additionally provided in the peripheral surface of the central sleeve (9), and each of these oblong holes (21) is engaged over by an additional annular channel (8).

## Revendications

1. Passage tournant (1) pour relier des conduits (17) de milieu sous pression, qui sont mobiles en rotation, l'un par rapport à l'autre, en étant agencés dans un arbre (3), à des raccords (6) de milieu sous pression, au travers desquels un milieu liquide sous pression est conduit, ce passage tournant comprenant
- un arbre (3),
- au moins, un conduit (17) de milieu sous pression en forme d'un canal s'étendant axialement à l'intérieur de l'arbre (3),
- un alésage radial (22) par conduit (17) de milieu sous pression qui s'étend à partir de la surface de l'arbre (3) au conduit (17) de milieu sous pression, lesdits alésages (22) des conduits (17) différents de milieu sous pression étant décalés, l'un par rapport à l'autre, en direction axiale,
- une pièce (5) de raccordement qui entoure l'arbre (3) dans la région des alésages (22), cette pièce (5) de raccordement étant configurée dans la région de chacun des alésages (22) avec une rainure (8) annulaire qui recouvre entièrement l'alésage (22), de sorte que, conjointement avec l'arbre (3), il se forme un canal (8) annulaire,
- un raccord (6) de milieu sous pression par conduit (17) de milieu sous pression qui communique de manière étanche à la pression, à chaque fois, avec l'un des canaux (8) annulaires et alimente celui-ci en milieu sous pression, et
- des bagues d'étanchéité (25) qui rendent étanches les canaux annulaires (8), l'un par rapport à l'autre,
**caractérisé en ce que**
- entre la pièce (5) de raccordement et l'arbre (3) est appliquée une douille centrale (9) qui est reliée de manière étanche à la pression et fixe en rotation à la pièce (5) de raccordement et comprend des premières sections (18) cylindriques annulaires dont les surfaces périphériques sont munies d'ouvertures (12) uniformément réparties annulairement en direction périphérique sur toute la périphérie, ces ouvertures (12) étant entièrement recouvertes par les rainures annulaires de la pièce de raccordement, lesdites premières sections (18) cylindriques annulaires étant séparées, l'une de l'autre, en direction axiale par de secondes sections (19) cylindriques annulaires qui ne comprennent pas d'ouvertures,
- les alésages (22) radiaux sont configurés sous la forme de trous oblongs dont la longueur est choisie de telle façon que, dans chaque position de l'arbre (3) par rapport à la douille centrale (9), au moins l'une des ouvertures (12) est dans l'alignement complet avec l'alésage radial (22), et
- les bagues d'étanchéité (25) sont montées dans des contre-dépouilles dans l'arbre (3) et coopèrent avec les secondes sections (19) cylindriques annulaires de la douille centrale (9).

2. Passage tournant (1) selon la revendication 1, **caractérisé en ce que** la pièce (5) de raccordement se compose d'une ou de plusieurs douilles qui sont fabriquées par un procédé de formage à partir de pièces en tôle.

3. Passage tournant (1) selon la revendication 1, **caractérisé en ce que** la douille centrale (9) est fabriquée à partir d'une pièce en tôle par un procédé de formage et les ouvertures (12) sont réalisées par poinçonnage.

4. Passage tournant (1) selon la revendication 1, **caractérisé en ce que** la pièce (5) de raccordement consiste en une première douille angulaire (7) par raccord (6) de milieu sous pression, la paroi de cette première douille angulaire (7) ayant une configuration en forme de U en section droite et formant ainsi une rainure annulaire.

5. Passage tournant (1) selon la revendication 1, **caractérisé en ce que** la pièce (5) de raccordement consiste en une douille extérieure (28) et plusieurs troisièmes douilles angulaires (27), ces troisièmes douilles angulaires (27) étant montées entre les premières sections (18) cylindriques annulaires sur la douille centrale (9), **en ce que** les troisièmes douilles angulaires (27) sont recouvertes par la douille extérieure (28), et **en ce que** les liaisons entre la douille extérieure (28) et la douille centrale (9), entre la douille extérieure (28) et les troisièmes douilles angulaires (27) ainsi qu'entre les troisièmes douilles angulaires (27) et la douille centrale (9) sont rendues étanche à la pression.

6. Passage tournant (1) selon la revendication 5, **caractérisé en ce que** les troisièmes douilles angulaires (27) sont montées sur la douille centrale (9) par ajustage serré.

7. Passage tournant (1) selon la revendication 5, **caractérisé en ce que** la paroi des troisièmes douilles angulaires (27) est configurée en forme de U en section longitudinale.

8. Passage tournant (1) selon la revendication 6, **caractérisé en ce que** les troisièmes douilles angulaires (27) sont munies, à chaque fois, d'une bague d'étanchéité (33), de sorte qu'il se forme une liaison étanche entre les troisièmes douilles angulaires (27) et la douille centrale (9) ou la douille extérieure (28).

9. Passage tournant (1) selon la revendication 5, **caractérisé en ce que**, à ses extrémités axiales, la douille extérieure (28) est reliée de manière étanche à la pression à la douille centrale (9) par des joints soudés (31) annulaires continus.

10. Passage tournant (1) selon la revendication 5, **caractérisé en ce que** les troisièmes douilles angulaires (27) sont reliées, à chaque fois, à la douille extérieure (28) par une soudure annulaire continue.

11. Passage tournant (1) selon la revendication 5, **caractérisé en ce que** les troisièmes douilles angulaires (27) sont reliées, à chaque fois, à la douille centrale (9) par une soudure annulaire continue (32).

12. Passage tournant (1) selon la revendication 1, **caractérisé en ce que,** dans la surface périphérique de la douille centrale (9) sont prévus, en plus, des trous oblongs (21) qui s'étendent en direction périphérique et sur lesquels s'engage, à chaque fois, un canal annulaire additionnel (8).
